# EUROPEAN PATENT SPECIFICATION

(11) **EP 2 387 676 B1**
(45) Date of publication and mention of the grant of the patent: **17.12.2014**
(21) Application number: 10731441.1
(22) Date of filing: 14.01.2010
(51) Int. Cl.: F16H 59/04, B60W 10/02, B60W 10/04, B60W 30/18, F16D 48/00

(54) **MOTOR VEHICLE WITH TRANSMISSION**
MOTORFAHRZEUG MIT GETRIEBE
VÉHICULE MOTORISÉ À TRANSMISSION

(30) Priority: 14.01.2009 SE 0950009
(43) Date of publication of application: 23.11.2011
(73) Proprietor: Scania CV AB (publ), 151 87 Södertälje (SE)
(72) Inventor: RAMIC, Elvedin, S-647 52 Åkers Styckebruk (SE)
(86) International application number: PCT/SE2010/050033
(87) International publication number: WO 2010/082896

(56) References cited:
- EP-A1- 0 584 985
- EP-A1- 1 801 465
- EP-A1- 1 801 465
- EP-A2- 0 911 207
- EP-A2- 0 911 207
- EP-A2- 1 103 742
- EP-A2- 1 553 318
- DE-A1- 3 334 724
- US-A- 5 681 242
- US-A- 5 681 242
- US-A1- 2003 092 530

## Description

### TECHNICAL FIELD

The present invention relates to a method for improving the performance of a motor vehicle. The invention relates also to a computer programme product comprising programme code for a computer for implementing a method according to the invention. The invention relates also to a device and a motor vehicle which is equipped with the device.

### BACKGROUND

In motor vehicles which have an automated transmission with manual control (AMT, automated manual transmission), a driver of the vehicle can use a gear lever to select gear steps in the vehicle's gearbox. This type of transmission is currently used, for example, by the vehicle manufacturer Scania under the trademark Opticruse. The gear lever in such vehicles is adapted to providing a command signal on the basis of which a control unit in the vehicle can control the vehicle's transmission and engine. Vehicles of this type have no conventional clutch pedal.

Drivers accustomed to driving vehicles which have clutch pedals may wish, when driving vehicles which have AMT systems, to have a supplementary functionality for certain gears. Such systems exist in vehicles today. Such vehicles are provided with a control device which the driver can use to activate certain functionalities which are implemented by a control unit in the vehicle.

US 7,338,409 B2 describes a vehicle with an engine, transmission and a gear selector device which is provided with an input device for choice of operating mode. A driver of the vehicle can use the gear selector device to select gear steps in the transmission, and the input device to choose between various operating modes. However, that solution is not user-friendly and intuitive for a driver of the vehicle.

In US 5,681,242 there is described a control for a vehicular automated clutch drivingly interposed between a fuel-controlled engine and a multi-speed, change-gear transmission providing enhanced low-speed manoeuvring control. Upon manual selection of creep mode, an enhanced creep mode is activated, effective over a relatively large range of throttle pedal displacement. The enhanced creep mode provides a mode of clutch control substantially identical to that attained in creep mode, except that the degree of clutch engagement and the fuelling of the engine is controlled over a much greater range of throttle pedal movement.

A disadvantage with the control depicted in US 5,681,242 is that the additional functionality in form of the enhanced creep mode is associated with the two lowest gear steps of the transmission only, i.e. the lowest gear step for forward drive and the lowest gear step for backward drive.

Another disadvantage of the control depicted in US 5,681,242 is that the enhanced creep mode is easy to activate by mistake by a driver of the vehicle, which may cause a source of irritation and undesired characteristics of the vehicle control.

EP1103742 shows a method and a device for customizing the transmission of a motor vehicle which transmission which has a plurality of gear steps, which method comprises the steps of:
- acting manually upon a gear step selection facility in such a way that a predetermined functionality for any one of the present gear steps of said transmission is activated; wherein
- the step of acting manually upon the gear step selection facility is effected by moving the latter from a neutral position to a first or second change position and keeping it in that same position for at least a predetermined time from when the change position is assumed, and wherein said manual acting differs from the normal acting for choosing a gear step of said transmission

### SUMMARY OF THE INVENTION

An object of the present invention is to propose a novel and advantageous method for improving the performance of a motor vehicle.

Another object of the invention is to propose a method and computer programme for improving the performance of a motor vehicle.

A further object of the invention is to propose a method and computer programme for effecting a user-friendly method for improving the drivability of a motor vehicle. An object of the invention is to make improved operability possible for a driver of a motor vehicle.

These objects are achieved with a method for improving the performance of a motor vehicle with a transmission which has a plurality of gear steps, which method comprises the step according to claim 1.

According to the invention there is provided a method for improving the performance of a motor vehicle with a transmission which has a plurality of gear steps, which method comprises the steps of:
- acting manually upon a facility in such a way that a predetermined functionality for any one of the present gear steps of said transmission is activated; wherein
- said manual acting differs from the normal acting for choosing a gear step of said transmission.

Acting manually upon a facility for gear step selection in such a way that a predetermined functionality for any one of the present gear steps of said transmission is activated results in a user-friendly and intuitive method for improving the performance of the motor vehicle. By allowing a predetermined functionality to be activated for any one of the present gear steps a more versatile solution of the above mentioned problems is achieved. Contrary to control depicted in US 5,681,242, the predetermined functionality depicted herein may be activated for gear steps other than the two lowest gear steps, which two lowest gear steps are associated with in a forward drive and backward drive of the vehicle, respectively.

By acting manually in a way differing from the normal acting for choosing a gear step of said transmission, a more robust method according to the invention is provided. By acting manually in a way differing from the normal acting for choosing a gear step of said transmission a risk for activating a predetermined functionality for any one of the present gear steps of said transmission by mistake is reduced. To act manually in a way differing from the normal acting for choosing a gear step of said transmission is to act manually upon the gear step selection facility by moving it from a neutral position to a first or second change position and keeping it there for at least a predetermined time, such as e.g 0.8 seconds, from the assumption of the change position.

Acting manually upon a facility for gear step selection in such a way that a predetermined functionality for a given gear step of said transmission is activated results in a user-friendly and intuitive method for improving the performance of the motor vehicle.

An advantage of using the gear step selection facility already existing in the vehicle is that there is no need for any extra operating means, such as an input device with associated peripheral equipment, for activating a predetermined functionality pertaining to a certain gear step. A driver of the vehicle can easily use the gear step selection facility, e.g. a paddle selector, herein referred to as a gear paddle, or gear lever, to select a virtual gear.

This virtual gear is a gear step with associated desired functionality. An expansion of the gear pattern of the transmission is thus provided in a simple and cost-effective manner.

As vehicles with automated manual transmissions have no physical clutch pedal, a driver of the vehicle can apply desired driving characteristics of the vehicle by activating a certain functionality for a given gear step. These driving characteristics may be particularly desirable in driving situations where drivers traditionally use a clutch pedal for controlling the vehicle, e.g. in confined spaces or when a trailer is coupled to the motor vehicle (the tractor unit).

Predetermined functionality may be activated for any desired gear step of the vehicle's transmission. The behaviour of the vehicle can thus be altered for a given gear step and the driver can apply and perceive desired characteristics of the vehicle for that gear step. According to an embodiment, a certain predetermined functionality may also be activated for various gear steps of the transmission.

The method may further comprise the step of providing said predetermined functionality for a first reverse gear step and/or a first forward gear step. It is primarily for these low gear steps that an extra functionality associated with them may need to be activated. Preferably it is possible for a unique functionality for a selected gear step to be activated by acting upon the gear step selection facility for each gear step.

The step of acting manually upon the gear step selection facility is effected by moving the facility manually from a neutral position to a first or second change position. This is a method usually employed for gear step changes, and the provision of an expanded gear pattern with one or more virtual gear steps will enable the driver to intuitively activate desired functionality for a selected gear step.

The step of acting manually upon the gear step selection facility by moving it from a neutral position to a first or second change position and keeping it there for at least a predetermined time from the assumption of the change position results in a more robust method which minimises the risk of incorrectly activating a certain functionality.

The predetermined time may be 0.5 second, but any desired predetermined time may be adopted. It may be 1 second or longer. This timer function is therefore adaptable to a driver's own preferences, resulting in a more versatile scope for users.

The functionality entails controlling a slip-in process of an automated clutch of the transmission in such a way that it is effected more slowly than if said functionality had not been activated for the given gear ratio step. The advantage of this is that a driver can drive the vehicle at inching speed in a more controlled way. This functionality may for example mean that a rate at which clutch plates of a clutch of the vehicle's transmission are brought into engagement is initially slower than if the functionality for the gear step selected had not been activated. A driver may therefore find that driving the vehicle with this functionality activated is "gentler".

Functionality may also entail reducing an engine torque requested by the driver as compared with if said functionality had not been activated for the given gear ratio step. The result is that the movement of the vehicle becomes less jerky. In driving situations where it is not important to accelerate the vehicle, the use of this functionality may be desired by a driver.

The functionality may entail upward limitation of the engine's speed to a predetermined value. This has the advantage of minimising the risk of generating too much output torque from the engine.

Said facility is a gear step selection facility. This provides the advantage that an additional control device is not required to activate the predetermined functionality for any of the present gear steps. Thus, there is provided a cost effective solutions to the above stated problems.

Said predetermined functionality may be activated for a gear step which is the gear step in operation. Since an operator, or driver, of the vehicle may have a sense of how well operation of the vehicle is performed, given a particular gear step in operation, an active decision regarding activation of a predetermined functionality associated with this gear step may be taken. Thereby an intuitive solution of the above stated problems is achieved.

The method is easy to implement in existing motor vehicles which have an automatic manual transmission. Software for improving the performance of a motor vehicle according to the invention may be installed in a control unit of the vehicle during the manufacture of the vehicle. A purchaser of the device may thus have the possibility of choosing the method's function as an option. Alternatively, software comprising programme code for effecting the innovative method for improving the performance of a motor vehicle may be installed in a control unit of the vehicle on the occasion of upgrading at a service station. In that case, the software may be loaded into a memory in the control unit. Implementing the innovative method is therefore inexpensive, particularly as no further knobs, buttons or electronic components need be installed in the vehicle. The necessary hardware is currently already provided in the vehicle. The invention therefore represents a cost-effective solution to the problem of improving the performance of a motor vehicle.

Software which comprises programme code for activating predetermined functionalities and makes it possible to control the vehicle's engine and transmission, including clutch and gearbox, can easily be updated or replaced. Various parts of the software which comprise programme code for activating a certain predetermined functionality can also be replaced independently of one another. This modular configuration is advantageous from a maintenance perspective.

The method according to the invention represents a robust supporting function which provides a driver with more possibilities for driving the vehicle in a desired manner, particularly in otherwise difficult driving situations.

The objects indicated above are also achieved with a device for improving the performance of a motor vehicle, which device comprises the features according to claim 7. Advantageous embodiments are indicated in the dependent claims 8-12.

These objects are also achieved with a motor vehicle which comprises the features according to claim 13. The motor vehicle may be a truck, a bus or a passenger car.

These objects are also achieved with a computer programme according to claim 15.

These objects are also achieved with a computer programme product according to claim 16.

Further objects, advantages and novel features of the present invention will become apparent to one skilled in the art from the following details, as also by applying the invention. Although the invention is described below, it should be noted that it is not limited to the specific details described. One skilled in the art who has access to the teachings herein will recognise further applications, modifications and incorporations within other fields, which are within the scope of the invention.

### BRIEF DESCRIPTION OF THE DRAWINGS

Fuller understanding of the present invention and further objects and advantages of it may be gathered from the following detailed description which is to be read in conjunction with the accompanying drawings, in which the same reference notations pertain to similar parts in the various diagrams, and in which:
Figure 1 illustrates schematically a vehicle according to an embodiment of the invention;
Figure 2 illustrates schematically a subsystem pertaining to the vehicle depicted in Figure 1, according to an embodiment of the invention;
Figures 3a-d illustrate schematically various gear steps according to various embodiments of the invention;
Figure 4 illustrates schematically a flowchart of a method according to an embodiment of the invention;
Figure 5 illustrates schematically a computer according to an embodiment of the invention.

### DETAILED DESCRIPTION OF THE DRAWINGS

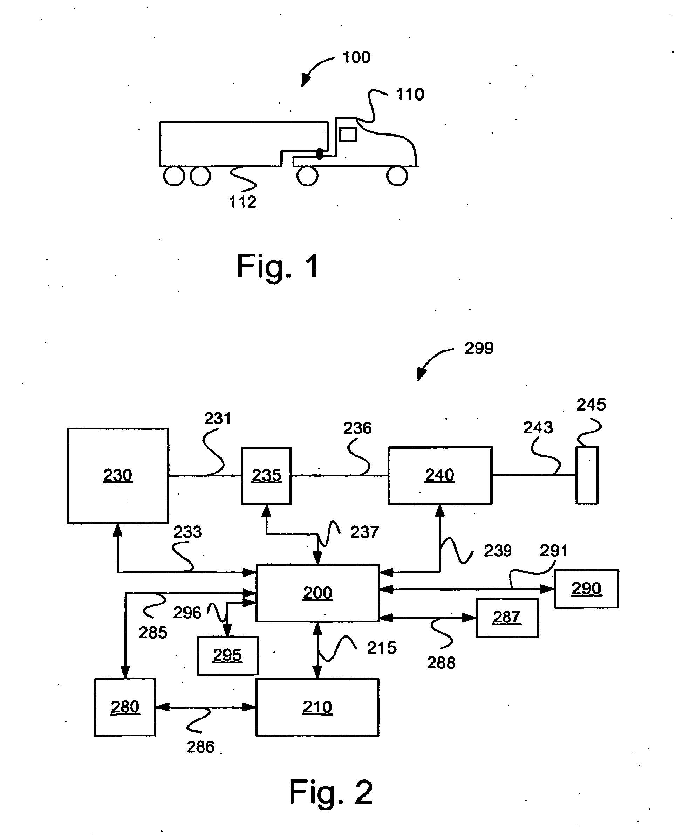

Figure 1 depicts a side view of a vehicle 100. The vehicle 100 exemplified comprises a tractor unit 110 and a trailer 112. The vehicle may be a heavy vehicle, e.g. a truck or a bus. The vehicle may alternatively be a passenger car. The vehicle 100 is a motor vehicle with automated transmission. In this version the vehicle therefore has no conventional clutch pedal and the driver controls the vehicle by means of a power control device, e.g. an accelerator pedal, and a facility for changing the transmission's gear ratio as indicated below.

The term "link" refers herein to a communication link which may be a physical line such as an opto-electronic communication line, or a non-physical line such as a wireless connection, e.g. a radio link or microwave link.

Figure 2 depicts a subsystem 299 of the vehicle 100. The subsystem 299 is situated in the tractor unit 110. The subsystem 299 has an engine 230. The engine 230 may be a combustion engine. The combustion engine may be an engine with six cylinders. The combustion engine may be a diesel engine. The subsystem 299 provides functionalities which make automated manual control of the transmission possible.

The engine 230 has an output shaft 231 connected to a clutch 235. The clutch may for example be of a conventional disc type such as a double-plate clutch. The clutch 235 is also connected to a shaft 236. The shaft 236 is an input shaft to a gearbox 240. The gearbox 240 has an output shaft 243 adapted to transmitting power from the engine to a number of vehicle wheels 245 in a known manner. The clutch 235 is adapted to being able to interrupt the power transmission in the driveline which comprises the shaft 231, the clutch 235, the shaft 236, the gearbox 240 and the shaft 243. According to a version, the control unit 200 is adapted to controlling both the clutch 235 and the gearbox 240. The control unit 200 is provided with communication with the clutch 235 via a link 237. The control unit 200 is provided with communication with the gearbox 240 via a link 239.

According to a version, an operating means 280 is already provided in a driving cab of the tractor unit 110. The operating means 280 is intended for signal communication with the control unit 200 via a link 285. The operating means 280 is adapted to responding to being acted upon by a driver of the vehicle by generating command signals containing information, e.g. about requested gear steps, and sending it to the control unit 200. The operating means 280 is also referred to as a gear lever. According to a preferred version, the operating means is a so-called paddle selector or gear paddle adapted to making it possible to change gear up and/or down in the vehicle's gearbox 240.

A description now follows of a version of the operating means 280, viz. the aforesaid gear paddle. The gear paddle can be moved manually in at least two directions from a neutral position N. By moving the gear paddle in a first direction from the neutral position N to a first change position, a driver of the vehicle can choose to change to a higher gear in the vehicle's gearbox 240. By moving the gear paddle in a second direction from the neutral position N to a second change position, a driver of the vehicle can choose to change to a lower gear in the vehicle's gearbox 240. By repeated manual movements of the gear paddle in a first or second direction from the neutral position N to a change position, a driver of the vehicle can choose to change up or down in the vehicle's gearbox 40 by a corresponding number of gear steps. The first direction may be to the right as seen by the driver. The second direction may be to the left as seen by the driver. According to a version, the gear paddle may resemble a joystick which can be tilted in two directions.

The gear paddle is so arranged that it can revert to neutral position automatically from the first or second change position. This functionality may be provided by a suitably arranged spring means.

The gear paddle may also be movable in a third direction. According to a version, the third direction is inwards towards the forward portion of the vehicle. This third direction may coincide with a longitudinal axis of the gear paddle. Pushing the gear paddle inwards towards the forward portion of the vehicle may activate a further predetermined functionality. A unique functionality may be associated with a certain given gear step. For example, if a first forward gear step 1 is engaged in the gearbox 240 of the vehicle, a driver may choose to activate a predetermined functionality for the first forward gear step. This so-called virtual gear step 1 s can therefore be effected by acting upon the gear paddle in the abovementioned way. In the same way, in cases where a reverse gear step R1 of the gearbox 240 is engaged, a driver may choose to activate a predetermined functionality for the reverse gear R1 by acting upon the gear paddle in the abovementioned way. A virtual gear step R1 S may thus be effected.

According to one example of the present invention there is provided a control device 295 arranged for activating the predetermined functionality for an arbitrary gear step of the transmission of the vehicle 100. The control device 295 is arranged for communication with the first control unit 200 via a link 296. The control device 295 may be a push button. The control device 295 may be arranged at a steering wheel (not shown) of the vehicle 100. The control device 295 may be arranged in a dashboard (not shown) of the vehicle 100. The control device 295 may be a push button or a switch for manually activating and de-activating a predetermined functionality for an arbitrary gear step, according to an aspect of the invention.

According a preferred version, a virtual gear step of the vehicle's gearbox may be effected by the driver keeping the gear paddle in an extreme position for longer than a predetermined time. By keeping the gear paddle in an extreme position it is thus possible to activate a predetermined functionality for a given gear step. The extreme position may be the first extreme position. The extreme position may alternatively be the second extreme position. The amount of time for which the gear paddle needs to be kept in an extreme position to activate the predetermined functionality may be of any desired length. The predetermined minimum amount of time required for activating the predetermined functionality may be 0.5 second. By keeping the virtual gear step in an extreme position for a given gear longer than 0.5 second, the driver can thus activate the predetermined functionality. Alternatively, the time required for activating the predetermined functionality may be 1 second, or more. According to one embodiment the time required for activating the predetermined functionality may be 0.8 seconds.

The operating means 280 is also provided with communication with a second control unit 210 via a link 286. The second control unit 210 is provided with communication with the control unit 200 via a link 215. The second control unit 210 may be detachably connected to the control unit 200. The second control unit 210 may be a control unit external to the vehicle 100. The second control unit 210 may be adapted to performing the innovative method steps according to the invention. The second control unit 210 may be used for transferring software to the control unit 200, particularly software for effecting the innovative method. The second control unit 210 may alternatively be provided with communication with the control unit 200 via an internal network in the vehicle. The second control unit 210 may be adapted to performing functions substantially similar to the first control unit, e.g. controlling the engine 230, the clutch 235 and the gearbox 240.

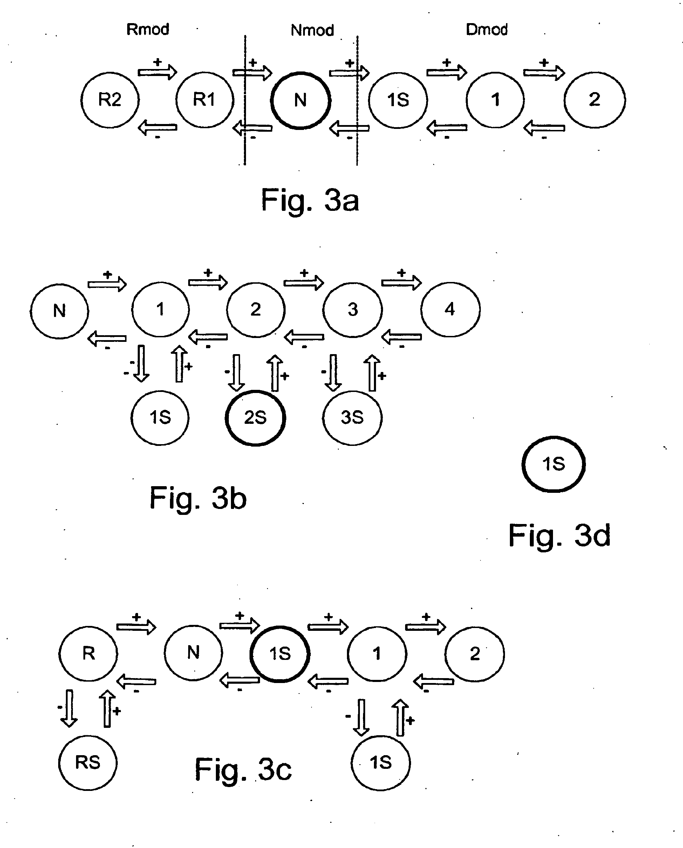

A display device 287 is provided with communication with the first control unit 200 via a link 288. The first control unit 200 is adapted to showing via the display device 287 one or more alphanumeric signs or one or more symbols indicating which gear step is engaged in the gearbox 240. The second control unit 210 is likewise adapted to showing via the display device 287 one or more alphanumeric signs or one or more symbols indicating which gear step is engaged in the gearbox 240. The display device 287 may be situated in an instrument panel and thus be visually accessible to a driver of the vehicle. The display device 287 is adapted to showing on a screen one or more symbols indicating which gear is engaged in the gearbox 240. The display device 287 is described below in more detail with reference to Figures 3a-d.

A power control device 290 is connected for signalling purposes to the control unit 200 via a link 291. The driver can use the power control device 290 to request desired engine torque in a known manner. The power control device 290 may be a conventional accelerator pedal. A driver of the vehicle can use the power control device 290 to set a desired speed for the engine 230.

According to this version, the control unit 200 is also adapted to controlling the engine 230 via a link 233. To this end, the control unit 200 is connected for signalling purposes to operating means (not depicted), e.g. injection valves for injecting fuel to the engine's cylinders. Separate control units may of course be provided for the engine and the gearbox respectively but will need to be connected together to enable them to communicate relevant information between them.

According to this version, the control unit 200 is adapted to controlling the gearbox 240 via a link 239. To this end, the control unit 200 is connected for signalling purposes to operating means (not depicted) for gear step change in the gearbox on the basis of command signals initiated by the operating means 280.

According to an embodiment, the operating means 280 is provided with a control device, e.g. a knob, by which a driver can change driving state manually. Three different driving states may be provided, viz. a first driving state Dmod for driving the vehicle in a forward direction, a second driving state Rmod for driving the vehicle in a reverse direction, and a third driving state Nmod which is a neutral driving state. An example of this is described below with reference to Figure 3a.

Figure 3a illustrates schematically an outline of various gear steps available for a transmission of a motor vehicle, according to an embodiment of the invention. The various gear steps are a neutral gear step N, a first reverse gear step R1, a second reverse gear step R2, a first forward gear step 1 and a second forward gear step 2. A first virtual gear step 1S is also illustrated.

By acting upon the operating means 280, e.g. a gear paddle (see Figure 2), a driver of the vehicle can change gear steps according to the outline depicted in Figure 3a. By acting upon the gear paddle in the previously mentioned manner, a driver can sequentially change gear steps of the vehicle's gearbox. In situations where the current gear step is the first forward gear step 1, the driver can change to the second forward gear step 2 by moving the operating means from neutral position to a first extreme position as described above.

Arrows accompanied by plus signs (+) illustrate upward gear step changes. Arrows accompanied by minus signs (-) illustrate downward gear step changes.

The symbols illustrated representing different gear steps may be displayed on a screen of the display device 287 (see Figure 2). The current gear step at a given time may be marked in any desired manner, e.g. by a certain colour or distinctive intensity of illumination. This example indicates that the driver has chosen the neutral gear step N by there being round the letter N a different kind of circle from the other circles which surround other alphanumeric signs representing various gear steps of the vehicle's transmission. The same also applies in Figures 3b-d below.

The first virtual gear step 1S is a gear step whereby a first forward gear step is available in the vehicle's gearbox but certain predetermined functionality has been activated. By effecting the virtual gear step 1S in this way a driver of the vehicle can in an intuitive manner use the gear paddle for gear step selection.

By selecting a virtual gear step it is possible to change the behaviour of the motor vehicle as if an extra physical gear step had been added to the vehicle's transmission.

The virtual gear steps added to the transmission's gear pattern can with advantage be used in driving situations which require precision driving by the driver. An example of such a situation is where a trailer is to be connected to a tractor unit. Another example may be where the vehicle has to be driven a very short distance in a garage or loading bay with limited space where the avoidance of jerky vehicle movements is desirable.

Three different driving states comprising different gear steps are illustrated, viz. a first driving state Dmod for driving the vehicle in a forward direction, a second driving state Rmod for driving the vehicle in a reverse direction, and a third driving state Nmod which is a neutral driving state.

According to an embodiment, it is possible to change from virtual gear step R1 S to virtual gear step 1S by acting upon a control device, e.g. a knob, provided on the operating means 280 so that an Rmod driving state is changed to a Dmod driving state.

In a similar way it is possible, according to an embodiment, to change from virtual gear step 1S to virtual gear step R1S by acting upon a control device, e.g. a knob, provided on the operating means 280 so that a Dmod driving state is changed to an Rmod driving state.

Figure 3b illustrates schematically an outline of various gear steps available for the transmission of a motor vehicle, according to an embodiment of the invention.

According to that embodiment, there is a neutral virtual gear N, a first virtual gear 1, a second virtual gear 2, a third virtual gear 3 and a fourth virtual gear 4. A driver of the vehicle can choose various gear steps by moving the operating means 280 depicted in Figure 2 in a first or second direction as described above.

Also illustrated are a first virtual gear step 1 S, a second virtual gear step 2S and a third virtual gear step 3S. The first virtual gear step 1S is a step whereby certain predetermined functionality is activated for the first virtual gear 1. The second virtual gear step 2S is a step whereby certain predetermined functionality is activated for the second virtual gear 2. The third virtual gear step 3S is a step whereby certain predetermined functionality is activated for the third virtual gear 3.

A driver of the vehicle can use the operating means 280 to select any of the virtual gear steps 1S, 2S or 3S by moving it in a third direction, as described with reference to Figure 2. When for example the first forward gear step 1 is operative, a driver of the vehicle can therefore choose to activate a certain predetermined functionality associated with the first gear step 1 by acting upon the operating means in such a way that the first virtual gear step 1 S is effected.

In an example according to the invention, when the first forward gear step 1 is operative, a driver of the vehicle can choose to activate a certain predetermined functionality associated with the first gear step 1 by keeping the gear paddle in a first or second change position for at least a certain predetermined time so that the first virtual gear step 1S is effected, as described with reference to Figure 2.

Figure 3c illustrates schematically an embodiment in which the principles described with reference to Figures 3a and 3b are combined in a single embodiment.

In this version, a first virtual reverse gear step R1S is selected in any of the ways indicated with reference to Figure 3b. It is likewise possible to select a second forward virtual gear step 2S in any of the ways indicated with reference to Figure 3b. A first virtual forward gear step 1S may be selected in the manner indicated with reference to Figure 3a.

It should be noted that there may be provided a unique predetermined functionality for each of the present gear steps of the transmission. Alternatively there may be provided only one predetermined functionality for the present gear steps of the transmission. Alternatively there may be provided a unique predetermined functionality for some of the present gear steps of the transmission and only one predetermined functionality for the remaining present gear steps of the transmission.

According to one aspect of the invention there may be provided a unique predetermined functionality for each of the low range gear steps of the transmission. Alternatively, there may be be provided a unique predetermined functionality for each of some of the low range gear steps of the transmission and only one predetermined functionality for the remaining low range gear steps of the transmission.

According to one aspect of the invention there is provided a unique predetermined functionality for each of the low range gear steps of the transmission, wherein an activated functionality is automatically de-activated in case a high range gear step is selected by the driver.

According to one aspect of the invention a predetermined functionality for a selected arbitrary gear step comprises routines for disengaging the clutch 235 in case the driver is using the accelerator pedal 290 in such a way that a reduced engine torque is requested. In this way the vehicle is easier to manoeuvre in certain driving situations.

According to one such driving situation where the invention is advantageous the vehicle is driven towards an end of a vehicle queue. The vehicle has in this case a selected gear step 4 and a certain speed. By activating a predetermined functionality being associated with gear step 4 desired characteristics are achieved. The driver of the vehicle 100 may in this particular situation edge along in a superior manner without any need of shifting to a lower gear step. When the traffic situation later allows higher speeds, the driver may de-activate the predetermined functionality and continue normal driving.

According to one aspect of the invention the first control unit 200 is arranged to automatically de-activate an activated predetermined functionality for a given gear step of the transmission of the vehicle. The first control unit 200 is arranged to automatically de-activate an activated predetermined functionality for a given gear step of the transmission of the vehicle when a predetermined condition is fulfilled. Said predetermined condition may be any suitable condition being related to e.g. current speed and/or acceleration of the vehicle, current engine torque or any other suitable vehicle parameter. Alternatively, de-activation of an activated predetermined functionality for a given gear step of the transmission of the vehicle may be performed manually using e.g. the control device 295 or the operating means 280.

Figure 3d illustrates schematically an embodiment in which only one symbol representing a currently prevailing gear step of the transmission is displayed on a screen of the display unit 287 (see Figure 2). There is thus minimisation of the amount of space required on the screen for giving the driver visual feedback about gear steps selected.

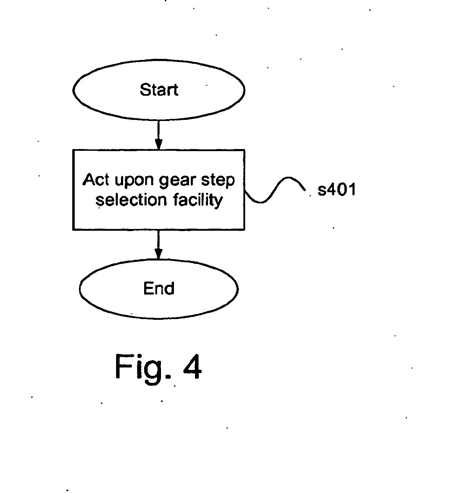

Figure 4 illustrates schematically a flowchart of a method for improving the performance of a motor vehicle with a transmission which has a plurality of gear steps, according to an embodiment of the invention.

The method comprises a first method step s401 which entails the step of acting manually upon a gear step selection facility in such a way that a predetermined functionality for a given gear step of said transmission is activated. Alternatively the first method step s401 which entails the steps of acting manually upon a facility, such as a gear step selection facility, in such a way that a predetermined functionality for any one of the present gear steps of said transmission is activated; wherein - said manual acting differs from the normal acting for choosing a gear step of said transmission. The method ends after step s401.

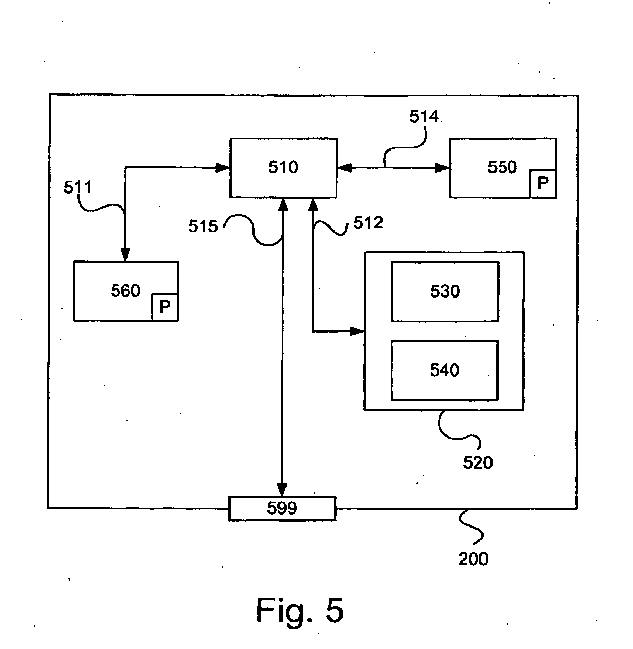

Figure 5 depicts a diagram of a version of a device 200. In a version, the control units described with reference to Figure 2 may comprise the device 200. The device 200 comprises a non-volatile memory 520, a data processing unit 510 and a read/write memory 550. The non-volatile memory 520 has a first memory element 530 in which a computer programme such as an operating system is stored for controlling the function of the device 200. The device 200 further comprises a bus controller, a serial communication port, I/O means, an A/D converter, a time and date input and transfer unit, an event counter and an interruption controller (not depicted). The non-volatile memory 520 has also a second memory element 540.

A computer programme P is provided and comprises routines for activating a predetermined functionality for a given gear step of a transmission of a motor vehicle in response to manual action upon a gear step selection facility. A computer programme P is provided and comprises routines for activating a predetermined functionality for any one of the present gear steps of said transmission in response to manual operation of a facility, wherein
- said manual operation differing from the normal acting for chosing a gear step of said transmission. The programme P comprises routines for controlling the vehicle's engine and transmission, including clutch and gearbox, in accordance with the predetermined functionality which is activated for a given gear step. Parts of that functionality may be stored in the form of charts which include parameters of the vehicle such as requested engine torque, accelerator pedal position, clutch disc position, etc. The programme P may be stored in an executable form or a compressed form in a memory 560 and/or a read/write memory 550.

The data processing unit 510 performing a certain function means the data processing unit 510 performing a certain part of the programme which is stored in the memory 560, or a certain part of the programme which is stored in the read/write memory 550.

The data processing unit 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514.

When data are received on the data port 599, they are stored temporarily in the second memory element 540. When input data received have been temporarily stored, the data processing unit 510 is organised to do code execution in a manner described above. According to a version, information signals received on the data port 599 contain information generated by, for example, the operating means 280 (see Figure 2). The information concerns selection of gear steps of the vehicle's transmission. This information may be used by the device 200 for controlling the vehicle's engine and transmission in accordance with stored routines for a given gear step. Alternatively this information may be used for controlling the vehicle's engine and transmission in accordance with stored routines for a virtual gear step, which stored routines constitute a predetermined functionality for an arbitrary chosen gear step.

Parts of the methods herein described can be effected by the device 200 by means of the data processing unit 510 which runs the programme stored in the memory 560 or the read/write memory 550. When the device 200 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will be obvious to one skilled in the art. The embodiments were chosen and described in order best to explain the principles of the invention and their practical applications and hence to make it possible for one skilled in the art to understand the invention for various embodiments and with the various modifications which are appropriate to the intended use.

## Claims

1. A method for improving the performance of a motor vehicle (100; 110) with a transmission which has a plurality of gear steps, which method comprises the steps of:
- acting manually upon a gear step selection facility (280) in such a way that a predetermined functionality for any one of the present gear steps of said transmission is activated; wherein
- the step of acting manually upon the gear step selection facility (280) is effected by moving the latter from a neutral position to a first or second change position and keeping it in that same position for at least a predetermined time from when the change position is assumed, and wherein said manual acting differs from the normal acting for choosing a gear step of said transmission;
**characterized in that** said predetermined functionality entails:
- controlling a slip-in process of an automated clutch (235) of the transmission in such a way that it is effected more slowly than if said functionality had not been activated for the given gear ratio step.

2. A method according to claim 1, further comprising the step of:
- providing said predetermined functionality for a first reverse gear step (R1) and/or a first forward gear step (1).

3. A method according to claim 1, in which said predetermined time is 0.5 second.

4. A method according to any one of the foregoing claims, in which said functionality entails:
- reducing an engine torque requested by the driver as compared with if said functionality had not been activated for the given gear ratio step.

5. A method according to any one of the foregoing claims, in which said functionality entails:
- upward limitation of the engine's speed to a predetermined value.

6. A method according to any one of the foregoing claims, wherein said predetermined functionality is activated for a gear step which is the gear step in operation.

7. A device for improving the performance of a motor vehicle with an automated manually controllable transmission which has a plurality of gear steps, the device comprising:
- a gear step selection facility (280), so arranged that by acting manually upon a gear step selection facility (280) a predetermined functionality for any one of the present gear steps of said transmission can be activated, wherein
- said manual acting for activating said predetermined functionality differs from the normal acting for choosing a gear step of said transmission; wherein
- the gear step selection facility (280) is adapted such that said manual acting is effected by moving the gear step selection facility (280) from a neutral position to a first or second change position, and keeping it in the same position for at least a predetermined time from when the change position is assumed,
**characterized in that** the device is configured such that
said functionality entails controlling a slip-in process of an automated clutch (235) of the transmission in such a way that it is effected more slowly than if said functionality had not beed activated for the given gear ratio step.

8. A device according to claim 7, further comprising:
- means (200; 210) for providing said predetermined functionality for a first reverse gear step (R1) and/or a first forward gear step (1).

9. A device according to claim 7, in which said predetermined time is 0.5 second.

10. A device according to any one of the claims 7-9, in which said functionality entails reducing requested engine torque as compared with if said functionality had not been activated for the given gear ratio step.

11. A device according to any one of the claims 7-10, in which said functionality entails upward limitation of the engine's speed to a predetermined value.

12. A device according to any of claims 7-11, wherein said predetermined functionality is activated for a gear step which is the gear step in operation.

13. A motor vehicle (100; 110) comprising a device according to any one of claims 7-12.

14. A motor vehicle (100; 110) according to claim 13, which the motor vehicle is any from among truck, bus or passenger car.

15. A computer programme (P) for improving the performance of a motor vehicle (100; 110) with a transmission which has a plurality of gear steps, which computer programme (P) comprises programme code stored on a computer-readable medium adapted to cause an electronic control unit (200) or another computer (210) connected to the electronic control unit (200) to perform the step of:
- activating a predetermined functionality for any one of the present gear steps of said transmission in response to manual operation of a gear step selection facility (280), wherein
- said manual operation comprises acting manually upon the gear step selection facility (280) by moving the latter from a neutral position to a first or second change position and keeping it in that same position for at least a predetermined time from when the change position is assumed, wherein said manual acting differs from the normal acting for choosing a gear step of said transmission;
**characterized in that** said predetermined functionality entails:
- controlling a slip-in process of an automated clutch (235) of the transmission in such a way that it is effected more slowly than if said functionality had not been activated for the given gear ratio step.

16. A computer programme product comprising the computer programme according to claim 15, wherein the programme code is stored on the computer-readable medium, and wherein said computer programme is run on the electronic control unit (200) or another computer (210) connected to the electronic control unit (200).

## Patentansprüche

1. Verfahren zum Verbessern der Leistung eines Kraftfahrzeugs (100; 110) mit einem Getriebe, das mehrere Gangstufen aufweist, wobei das Verfahren folgende Schritte umfasst:
- manuelles Betätigen einer Gangstufenauswahleinheit (280), derart, dass eine für jede der vorliegenden Gangstufen des Getriebes vorgegebene Funktionalität aktiviert wird; wobei
- der Schritt zum manuellen Betätigen der Gangstufenauswahleinheit (280) durch Bewegen der Gangstufenauswahleinheit (280) von einer neutralen Position zu einer ersten oder zweiten Wechselposition und durch Halten in dieser Wechselposition für zumindest eine vordefinierte Zeitdauer nach Einnehmen derselben erfolgt, und wobei sich das manuelle Betätigen von dem normalen Betätigen zur Auswahl einer Gangstufe des Getriebes unterscheidet;
**dadurch gekennzeichnet, dass** die vorgegebene Funktionalität umfasst:
- eine Steuerung eines Schlupfprozesses einer automatisierten Kupplung (235) des Getriebes, derart, dass der Schlupfprozess langsamer durchgeführt wird als dann, wenn die Funktionalität für die vorgegebene Übersetzungsstufe nicht aktiviert worden wäre.

2. Verfahren nach Anspruch 1, ferner umfassend den Schritt:
- Bereitstellen der vorgegebenen Funktionalität für einen ersten Rückwärtsgang (R1) und/oder einen ersten Vorwärtsgang (1).

3. Verfahren nach Anspruch 1, bei dem die vordefinierte Zeitdauer 0,5 Sekunden beträgt.

4. Verfahren nach einem der vorangehenden Ansprüche, bei dem die Funktionalität umfasst:
- eine durch den Fahrer angeforderte Verringerung eines Drehmoments im Vergleich zu einem Drehmoment, das vorliegen würde, wenn die Funktionalität für die vorliegende Übersetzungsstufe nicht aktiviert worden wäre.

5. Verfahren nach einem der vorangehenden Ansprüche, bei dem die Funktionalität umfasst:
- eine obere Begrenzung der Motordrehzahl auf einen vordefinierten Wert.

6. Verfahren nach einem der vorangehenden Ansprüche, bei dem die vorgegebene Funktionalität für eine Gangstufe aktiviert wird, die der Gangstufe im Betrieb entspricht.

7. Vorrichtung zum Verbessern der Leistung eines Kraftfahrzeugs mit einem automatisierten manuellen Getriebe, das mehrere Gangstufen aufweist, wobei die Vorrichtung umfasst:
- eine Gangstufenauswahleinheit (280), die dazu eingerichtet ist, dass durch ein manuelles Betätigen einer Gangstufenauswahleinheit (280) eine für jede der vorliegenden Gangstufen des Getriebes vorgegebene Funktionalität aktiviert sein kann, wobei
- sich das manuelle Betätigen zur Aktivierung der vorgegebenen Funktionalität von dem normalen Betätigen zur Auswahl einer Gangstufe des Getriebes unterscheidet; wobei
- die Gangstufenauswahleinheit (280) dazu eingerichtet ist, dass das manuelle Betätigen durch Bewegen der Gangstufenauswahleinheit (280) von einer neutralen Position zu einer ersten oder zweiten Wechselposition und durch Halten in dieser Wechselposition für zumindest eine vordefinierte Zeitdauer nach Einnehmen derselben erfolgt,
**dadurch gekennzeichnet, dass** die Vorrichtung dazu eingerichtet ist, dass die Funktionalität eine Steuerung eines Schlupfprozesses einer automatisierten Kupplung (235) des Getriebes umfasst, derart, dass der Schlupfprozess langsamer durchgeführt wird als dann, wenn die Funktionalität für die vorgegebene Übersetzungsstufe nicht aktiviert wäre.

8. Vorrichtung nach Anspruch 7, ferner aufweisend:
- ein Mittel (200, 210) zum Bereitstellen der vorgegebenen Funktionalität für einen ersten Rückwärtsgang (R1) und/oder einen ersten Vorwärtsgang (1).

9. Vorrichtung nach Anspruch 7, bei der die vordefinierte Zeitdauer 0,5 Sekunden beträgt.

10. Vorrichtung nach einem der Ansprüche 7 bis 9, bei der die Funktionalität eine angeforderte Verringerung eines Motordrehmoments im Vergleich zu einem Motordrehmoment umfasst, das vorliegen würde, wenn die Funktionalität für die vorgegebene Übersetzungsstufe nicht aktiviert wäre.

11. Vorrichtung nach einem der Ansprüche 7 bis 10, bei der die Funktionalität eine obere Begrenzung der Motordrehzahl auf einen vorbestimmten Wert umfasst.

12. Vorrichtung nach einem der Ansprüche 7 bis 11, wobei die Funktionalität für eine Gangstufe aktiviert ist, die der Gangstufe im Betrieb entspricht.

13. Kraftfahrzeug (100; 110), aufweisend eine Vorrichtung nach einem der Ansprüche 7 bis 12.

14. Kraftfahrzeug (100; 110) nach Anspruch 13, wobei das Kraftfahrzeug ein Fahrzeug der Kategorie Lastkraftfahrzeuge, Busse und Personenkraftfahrzeuge ist.

15. Computerprogramm (P) zum Verbessern der Leistung eines Kraftfahrzeugs (100; 110) mit einem Getriebe, das mehrere Gangstufen aufweist, wobei das Computerprogramm (P) einen auf einem computerlesbaren Medium gespeicherten Programmcode aufweist, der dazu eingerichtet ist, eine elektronische Steuerungseinheit (200) oder einen anderen mit der elektronischen Steuerungseinheit (200) verbunden Computer (210) zur Durchführung folgender Schritte zu veranlassen:
- Aktivieren einer für jede der vorliegenden Gangstufen des Getriebes vorgegebenen Funktionalität, die durch eine manuelle Bedienung einer Gangstufenauswahleinheit (280) ausgelöst wird, wobei
- die manuelle Bedienung ein manuelles Betätigen der Gangstufenauswahleinheit (280) umfasst, welches durch Bewegen der Gangstufenauswahleinheit (280) von einer neutralen Position zu einer ersten oder zweiten Wechselposition und durch Halten in dieser Wechselposition für zumindest eine vordefinierte Zeitdauer nach Einnehmen derselben erfolgt, und wobei sich das manuelle Betätigen von dem normalen Betätigen zur Auswahl einer Gangstufe des Getriebes unterscheidet;
**dadurch gekennzeichnet, dass** die vorgegebene Funktionalität umfasst:
- eine Steuerung eines Schlupfprozesses einer automatisierten Kupplung (235) des Getriebes, derart, dass der Schlupfprozess langsamer durchgeführt wird als dann, wenn die Funktionalität für die vorgegeben Übersetzungsstufe nicht aktiviert worden wäre.

16. Computerprogrammprodukt, aufweisend das Computerprogramm nach Anspruch 15, wobei der Programmcode auf dem computerlesbaren Medium gespeichert ist, und wobei das Computerprogramm durch die elektronische Steuerungseinheit (200) oder durch einen anderen mit der elektronischen Steuerungseinheit (200) verbunden Computer (210) ausgeführt wird.

## Revendications

1. Procédé pour l'amélioration des performances d'un véhicule à moteur (100 ; 110) ayant une transmission qui possède une pluralités de rapports, lequel procédé comprend les étapes consistant à :
- agir manuellement sur un dispositif de sélection de rapport (280) de telle sorte qu'une fonctionnalité prédéterminée pour l'un quelconque des rapports en cours de ladite transmission soit activée ; dans lequel
- l'étape d'action manuelle sur le dispositif de sélection de rapport (280) est effectuée par le fait de déplacer ce dernier d'une position neutre vers une première ou une deuxième position de changement et de le maintenir dans cette même position pendant au moins une durée prédéterminée à partir du moment où la position de changement est adoptée, et dans lequel ladite action manuelle diffère de l'action normale pour le choix d'un rapport de ladite transmission ;
**caractérisé en ce que** ladite fonctionnalité prédéterminée comporte :
- la commande d'une opération de glissement d'un embrayage automatisé (235) de la transmission de telle sorte qu'elle soit effectuée plus lentement que si ladite fonctionnalité n'avait pas été activée pour le rapport donné.

2. Procédé selon la revendication 1, comprenant en outre l'étape consistant à :
- prévoir ladite fonctionnalité prédéterminée pour un premier rapport de marche arrière (R1) et/ou un premier rapport de marche avant (1).

3. Procédé selon la revendication 1, dans lequel ladite durée prédéterminée est de 0,5 seconde.

4. Procédé selon l'une quelconque des revendications précédentes, dans lequel ladite fonctionnalité comporte :
- la réduction d'un couple moteur demandé par le conducteur par comparaison à si ladite fonctionnalité n'avait pas été activée pour le rapport donné.

5. Procédé selon l'une quelconque des revendications précédentes, dans lequel ladite fonctionnalité comporte :
- la limitation haute de la vitesse du moteur à une valeur prédéterminée.

6. Procédé selon l'une quelconque des revendications précédentes, dans lequel ladite fonctionnalité prédéterminée est activée pour un rapport qui est le rapport en fonctionnement.

7. Dispositif pour l'amélioration des performances d'un véhicule à moteur ayant une transmission automatisée à commande manuelle qui possède une pluralités de rapports, le dispositif comprenant :
- un dispositif de sélection de rapport (280), conçu de telle sorte que, par l'action manuelle sur un dispositif de sélection de rapport (280), une fonctionnalité prédéterminée pour l'un quelconque des rapports en cours de ladite transmission puisse être activée ; dans lequel
- ladite action manuelle pour activer ladite fonctionnalité prédéterminée diffère de l'action normale pour le choix d'un rapport de ladite transmission ; dans lequel
- le dispositif de sélection de rapport (280) est conçu de telle sorte que ladite action manuelle soit effectuée par le fait de déplacer le dispositif de sélection de rapport (280) d'une position neutre vers une première ou une deuxième position de changement et de le maintenir dans cette même position pendant au moins une durée prédéterminée à partir du moment où la position de changement est adoptée,
**caractérisé en ce que** le dispositif est configuré de telle sorte que ladite fonctionnalité comporte la commande d'une opération de glissement d'un embrayage automatisé (235) de la transmission de telle sorte qu'elle soit effectuée plus lentement que si ladite fonctionnalité n'avait pas été activée pour le rapport donné.

8. Dispositif selon la revendication 7, comprenant en outre :
- des moyens (200, 210) pour prévoir ladite fonctionnalité prédéterminée pour un premier rapport de marche arrière (R1) et/ou un premier rapport de marche avant (1).

9. Dispositif selon la revendication 7, dans lequel ladite durée prédéterminée est de 0,5 seconde.

10. Dispositif selon l'une quelconque des revendications 7-9, dans lequel ladite fonctionnalité comporte la réduction d'un couple moteur par comparaison à si ladite fonctionnalité n'avait pas été activée pour le rapport donné.

11. Dispositif selon l'une quelconque des revendications 7-10, dans lequel ladite fonctionnalité comporte la limitation haute de la vitesse du moteur à une valeur prédéterminée.

12. Dispositif selon l'une quelconque des revendications 7-11, dans lequel ladite fonctionnalité prédéterminée est activée pour un rapport qui est le rapport en fonctionnement.

13. Véhicule à moteur (100 ; 110) comprenant un dispositif selon l'une quelconque des revendications 7-12.

14. Véhicule à moteur (100 ; 110) selon la revendication 13, lequel véhicule à moteur est l'un quelconque parmi un camion, un bus ou un car de transport de passagers.

15. Programme informatique (P) pour l'amélioration des performances d'un véhicule à moteur (100 ; 110) ayant une transmission qui possède une pluralités de rapports, lequel programme informatique (P) comprend un code programme stocké sur un support lisible par ordinateur adapté pour faire en sorte qu'une unité de commande électronique (200) ou un autre ordinateur (210) connecté à l'unité de commande électronique (200) exécute les étapes consistant à :
- activer une fonctionnalité prédéterminée pour l'un quelconque des rapports en cours de ladite transmission en réponse à l'actionnement manuel d'un dispositif de sélection de rapport (280), dans lequel
- ledit actionnement manuel comprend l'action manuelle sur le dispositif de sélection de rapport (280) par le fait de déplacer ce dernier d'une position neutre vers une première ou une deuxième position de changement et de le maintenir dans cette même position pendant au moins une durée prédéterminée à partir du moment où la position de changement est adoptée, dans lequel ladite action manuelle diffère de l'action normale pour le choix d'un rapport de ladite transmission ;
**caractérisé en ce que** ladite fonctionnalité prédéterminée comporte :
- la commande d'une opération de glissement d'un embrayage automatisé (235) de la transmission de telle sorte qu'elle soit effectuée plus lentement que si ladite fonctionnalité n'avait pas été activée pour le rapport donné.

16. Produit de programme informatique comprenant le programme informatique selon la revendication 15, dans lequel le code programme est stocké sur le support lisible par un ordinateur, et dans lequel ledit programme informatique est exécuté sur l'unité de commande électronique (200) ou sur un autre ordinateur (210) connecté à l'unité de commande électronique (200).
